# EUROPÄISCHE PATENTSCHRIFT

(11) **EP 4 190 205 B1**
(45) Veröffentlichungstag und Bekanntmachung des Hinweises auf die Patenterteilung: **26.06.2024**
(21) Anmeldenummer: 22200176.0
(22) Anmeldetag: 07.10.2022
(51) Int. Cl.: A45F 3/14, A45C 13/30, B29C 45/14

(54) **KOMPONENTE EINES TRAGSYSTEMS**
COMPONENT OF A SUPPORT SYSTEM
COMPOSANT D'UN SYSTÈME DE SUPPORT

(30) Priorität: 01.12.2021 DE 102021131697
(43) Veröffentlichungstag der Anmeldung: 07.06.2023
(73) Patentinhaber: Lindnerhof-Taktik GmbH, 83661 Lenggries (DE)
(72) Erfinder: SCHWAGER, Martin, 82377 Penzberg (DE); SIXT, Josef, 83661 Lenggries (DE)
(74) Vertreter: Behr, Wolfgang

(56) Entgegenhaltungen:
- US-A1- 2007 158 380
- US-A1- 2008 257 922
- US-A1- 2017 311 704
- US-B2- 9 144 294

## Beschreibung

Die vorliegende Erfindung betrifft eine Komponente eines Tragsystems mit einem Gurtelement, welches mit einem ersten Ende an der Komponente befestigt ist und ein zweites, freies Ende aufweist, mit welchem es durch mindestens eine Schlaufe einer zweiten Komponente hindurchgefädelt werden kann, um die Komponenten aneinander zu befestigen.

Insbesondere kann es sich um die Komponente eines Tragsystems handeln, mit welchem Taschen, Munitions- oder Waffenträger oder ähnliche Komponenten flexibel an einer Plattform angebracht werden können. Die Plattform kann bspw. an einer Tasche, einem Rucksack, einer Weste oder einem Plattenträger vorgesehen sein und umfasst mindestens eine Schlaufe, an welcher die Komponente des Tragesystems durch ein Gurtelement befestigbar ist.

Beispielsweise kann es sich um PALS-Komponenten eines MOLLE-Systems handeln, wie es von der U.S. Army eingesetzt wird. Bei diesem System sind an beiden mit einander zu verbindenden Komponenten parallel zueinander verlaufende Gurtbänder derart aufgenäht, dass in Querrichtung durchgängige Öffnungen/Schlaufen ausgebildet werden. Diese werden durch ein quer zur Erstreckung der Schlaufen verlaufendes Gurtband, welches jeweils durch die parallel verlaufenden Gurtbänder hindurch gefädelt wird, miteinander verwoben. PALS-Komponenten eines MOLLE-Systems sind beispielsweise in der US 5 724 707 A beschrieben. Anstelle der waagrechten Gurtbänder werden teilweise auch in eine Materialschicht eingebrachte Schlitze eingesetzt.

Eine Komponente gemäß dem Oberbegriff von Anspruch 1 ist aus Druckschrift US 2017/311704 A1 bekannt.

Die quer verlaufenden Gurtbänder sind dabei üblicherweise an einer Seite, insbesondere ihrer Oberseite, mit der einen Komponente vernäht, werden dann mit ihrem Hauptteil durch die parallelen Gurtbänder hindurch geschoben, und können mit ihrem freien Ende in eine am anderen, insbesondere unteren Ende der Komponente angeordnete Tasche eingeschoben werden. Das Einschieben des freien Endes in die Tasche verriegelt damit die Verbindung. Um das freie Ende wieder aus der Tasche herausziehen zu können, ist an diesem üblicherweise noch ein schmäleres Band angebracht, welches aus der Tasche herausschaut. Alternativ wird eine Druckknopfverbindung und/oder ein Schnappverschluss zum Fixieren des freien Endes des quer verlaufenden Bandes eingesetzt.

Um das quer verlaufende Gurtband besser durch die Schlaufen hindurchfädeln zu können, ist es bekannt, dieses über Kunststoffelemente zu verstärken, welche an das Gurtelement angenäht werden. Das Band zum Herausziehen des freien Endes wird üblicherweise als separates, schmäleres Band, welches mit dem freien Ende des Gurtbands vernäht ist, gefertigt. Ebenso ist es bekannt, anstelle des Gurtbandes ein komplett aus Kunststoff gebildetes Element einzusetzen.

Mit Kunststoff umspritzte Bänder und faserverstärkte Scharniere sind aus anderen Bereichen der Technik beispielsweise aus den Druckschriften DE6909170U, DE19910309A1, US5945053A, DE4338373A1, EP2326579B1, WO2008015178A1 und US20140304946A1 bekannt. Ein mit Kunststoff umspritztes Gurtelement ist aus US 9 144 294 B2 bekannt.

Aufgabe der vorliegenden Erfindung ist es, eine verbesserte Komponente eines Tragsystems und ein verbessertes Gurtelement zur Verfügung zu stellen. Diese Aufgabe wird durch eine Komponente gemäß Anspruch 1 sowie ein Gurtelement gemäß Anspruch 13 gelöst.

Die vorliegende Erfindung umfasst eine Komponente eines Tragsystems mit einem Gurtelement, welches mit einem ersten Ende an der Komponente befestigt ist und ein zweites, freies Ende aufweist, mit welchem es durch mindestens eine Schlaufe einer zweiten Komponente hindurchgefädelt werden kann, um die Komponenten aneinander zu befestigen, wobei das Gurtelement ein textiles Gurtband und ein Kunststoffelement umfasst, wobei das Kunststoffelement an das Gurtband angespritzt ist, wobei das Gurtelement mindestens einen Scharnierbereich umfasst, welcher daran anschließende Bereiche des Kunststoffelementes verbindet und in welchen das Gurtband umgelegt werden kann, und/oder wobei das Kunststoffelement mindestens einen als Filmscharnier dienenden Kunststoffbereich umfasst.

Der Vorteil der Erfindung liegt zum einen darin, dass der Aufwand für die Herstellung der Gurtelemente, welche bisher einzeln durch Vernähen der entsprechenden Komponenten gefertigt werden mussten, verringert werden kann. Da diese Gurtelemente meist in identischer Form in hoher Stückzahl zum Einsatz kommen, ergibt sich hier ein erheblicher Vorteil. Zudem wird die Zuverlässigkeit und Handhabbarkeit des Gurtelementes erhöht.

Erfindungsgemäß kann das Gurtband insbesondere um 180° umgelegt werden.

Die Scharnierbereiche ermöglichen es, das Gurtelement an definierten, für die Befestigung mit der anderen Komponente geeigneten Stellen umzulegen bzw. umzufalten. Sie erleichtern daher die Handhabung und erhöhen die Zuverlässigkeit bei der Verwendung.

Gemäß einer möglichen Ausgestaltung der vorliegenden Erfindung werden die Scharnierbereiche durch das Gurtband zur Verfügung gestellt, über welches voneinander getrennte Bereiche des Kunststoffelementes verbunden werden.

Gemäß einer bevorzugten Ausgestaltung der vorliegenden Erfindung umfasst das Kunststoffelement in dem oder den Scharnierbereichen jedoch jeweils mindestens einen ein Filmscharnier bildenden Kunststoffbereich. Hierdurch wird die Stabilität des Gurtelementes im Scharnierbereich erhöht und zudem eine gezielte Umklapp-Bewegung um eine durch das Filmscharnier definierte Achse ermöglicht. Das Gurtband kann in dieser Ausgestaltung eine Sicherungsfunktion bei Versagen des Kunststoff-Filmscharniers aufweisen.

Gemäß einer möglichen Ausgestaltung der vorliegenden Erfindung verbinden das oder die Filmscharniere daher jeweils zwei Bereiche des Kunststoffelementes miteinander, welche durch das Filmscharnier aufeinander umgelegt werden können.

Gemäß einer möglichen Ausgestaltung der vorliegenden Erfindung verbindet der ein Filmscharnier bildende Kunststoffbereich Kunststoffbereiche des Kunststoffelements miteinander, in welchen das Kunststoffelement eine größere Materialstärke aufweist als in dem das Filmscharnier bildenden Kunststoffbereich.

Gemäß einer möglichen Ausgestaltung der vorliegenden Erfindung ist das Gurtband in den Kunststoffbereichen mit größerer Materialstärke durch das Kunststoffelement umspritzt.

Gemäß einer möglichen Ausgestaltung der vorliegenden Erfindung verbindet auch das Gurtband im Scharnierbereich jeweils zwei Bereiche des Kunststoffelementes miteinander. Dies erhöht die Stabilität und sichert die Befestigung der Komponente für den Fall, dass Kunststoff-Filmscharnier versagen sollte.

Gemäß einer möglichen Ausgestaltung der vorliegenden Erfindung ist das Kunststoffelement breiter als das Gurtband. Beispielsweise kann die Breite des Kunststoffelementes mindestens das 1,3-fache der Breite des Gurtbands betragen, bevorzugt mindestens das 1,8-fache der Breite des Gurtelementes. Die Breite des Kunststoffelementes beträgt bevorzugt weniger als das 3-fache der Breite des Gurtbandes.

Gemäß einer möglichen Ausgestaltung der vorliegenden Erfindung verläuft das Gurtband in Breitenrichtung mittig durch das Kunststoffelement.

Gemäß einer möglichen Ausgestaltung der vorliegenden Erfindung umfasst das Kunststoffelement in dem oder den Scharnierbereichen auf beiden Seiten des Gurtbandes jeweils einen als Filmscharnier dienenden Kunststoffbereich. Hierdurch wird ein besonders stabiler Scharnierbereich zur Verfügung gestellt.

Gemäß einer möglichen Ausgestaltung der vorliegenden Erfindung ist das Gurtband im Scharnierbereich nicht umspritzt. Hierdurch bleibt die Flexibilität des Gurtbandes im Scharnierbereich erhalten. Zudem wird eine zu große Dicke des Kunststoffelementes, welche ein Umklappen verhindern würde, vermieden.

Gemäß einer möglichen Ausgestaltung der vorliegenden Erfindung verläuft das Gurtband im Scharnierbereich in einer Aussparung im Kunststoffelement zwischen den das Filmscharnier bildenden Kunststoffbereichen.

Gemäß einer möglichen Ausgestaltung der vorliegenden Erfindung umfasst das Kunststoffelement mindestens zwei oder drei Bereiche, zwischen welchen ein Scharnierbereich vorgesehen ist. Hierdurch ist das Gurtelement an die ihm zukommende Aufgabe bei der Befestigung der beiden Komponenten angepasst.

Insbesondere kann das Kunststoffelement genau drei Bereiche aufweisen, welche durch Scharnierbereiche miteinander in Verbindung stehen.

Gemäß einer möglichen Ausgestaltung der vorliegenden Erfindung ist ein erster Bereich so angeordnet ist, dass er sich in einer durch die mindestens eine Schlaufe der zweiten Komponente hindurchgefädelten Position befindet, wenn die Komponente an der zweiten Komponente befestigt ist. Es kann sich hierbei um einen mittleren Bereich handeln, auf welchen an beiden Seiten Scharnierbereiche folgen.

Gemäß einer möglichen Ausgestaltung der vorliegenden Erfindung ist ein zweiter Bereich vorgesehen, welcher zur lösbaren Fixierung des Gurtelementes in der hindurchgefädelten Stellung dient

Gemäß einer möglichen Ausgestaltung der vorliegenden Erfindung bildet der zweite Bereich ein freies Ende des Kunststoffelementes und/oder ist in eine Tasche der Komponente einschiebbar.

Gemäß einer möglichen Ausgestaltung der vorliegenden Erfindung ist ein dritter Bereich vorgesehen, in welchem das Gurtelement fest mit der Komponente verbunden und bevorzugt vernäht ist.

Gemäß einer möglichen Ausgestaltung der vorliegenden Erfindung variiert die Breite des ersten Bereiches wellenförmig.

Gemäß einer möglichen Ausgestaltung der vorliegenden Erfindung sind der oder die Wellenbäuche dort angeordnet, wo das Gurtelement in der hindurchgefädelten Stellung eine Schlaufe der einen Komponente mit einer Schlaufe der anderen Komponente verbindet.

Gemäß einer möglichen Ausgestaltung der vorliegenden Erfindung umfasst das Kunststoffelement im ersten Bereich auf einer oder auf beiden Hauptflächen quer zur Erstreckung des Gurtelementes verlaufende Noppen- und/oder Wulstelemente. Diese können insbesondere beidseitig der Wellenbäuche verlaufen.

Gemäß einer möglichen Ausgestaltung der vorliegenden Erfindung wird der zweite Bereich in Richtung auf das freie Ende hin schmäler wird.

Gemäß einer möglichen Ausgestaltung der vorliegenden Erfindung weist der zweite Bereich einen breiteren Bereich auf, welcher an den Scharnierbereich anschließt, und einen schmaleren Bereich, welcher das freie Ende bildet, wobei der breitere und der schmalere Bereich durch einen Bereich verbunden sind, in welchem sich die Breite zum schmaleren Bereich hin stetig verringert.

Gemäß einer möglichen Ausgestaltung der vorliegenden Erfindung umfasst das Kunststoffelement im zweiten Bereich auf einer oder auf beiden Hauptflächen mindestens ein quer zur Erstreckung des Gurtelementes verlaufendes Noppen- und/oder Wulstelement. Dieses kann insbesondere in einem breiteren, an den Scharnierbereich anschließen Bereich angeordnet sein.

Gemäß einer möglichen Ausgestaltung der vorliegenden Erfindung ist das Kunststoffelement im dritten Bereich breiter als das Gurtband weist einen quer zur Erstreckung des Gurtelementes verlaufenden Stegbereich auf. Der Stegbereich dient bevorzugt dem Vernähen mit der Komponente.

Der Stegbereich kann das Gurtband im Querschnitt auf drei Seiten umgeben, während die vierte Seite des Gurtbandes bündig mit einer Seite des Stegbereiches verläuft. Hierdurch wird die Dicke des Stegbereiches verringert.

Gemäß einer möglichen Ausgestaltung der vorliegenden Erfindung umfasst das Kunststoffelement im dritten Bereich beidseitig des Gurtbands sich in Längsrichtung über das Ende des Gurtbandes erstreckende Laschen. Auch diese können mit der Komponente vernäht werden.

Gemäß einer möglichen Ausgestaltung der vorliegenden Erfindung ist das Kunststoffelement als Mehr-Komponenten-Spritzgussteil ausgeführt ist. Dies ermöglicht es, für unterschiedliche Bereiche des Kunststoffelementes jeweils einen an die Funktion des Bereiches angepassten Kunststoff einzusetzen.

Gemäß einer möglichen Ausgestaltung der vorliegenden Erfindung umfasst das Kunststoffelement eine äußere Struktur aus einer Hart-Kunststoff-Komponente, in welche eine Weich-Kunststoff-Komponente eingespritzt ist. Insbesondere werden dabei seitliche Kanten des Kunststoffelementes durch die Hart-Kunststoff-Komponente gebildet.

Gemäß einer möglichen Ausgestaltung der vorliegenden Erfindung bildet die Weich-Kunststoff-Komponente zumindest in einem Teilbereich des Kunststoffelementes eine Ober- und/oder Unterseite des Kunststoffelementes. Hierdurch wird die Handhabung verbessert und die Reibung mit den Schlaufen und der Komponente, welche für die sichere Verbindung von Bedeutung ist, erhöht.

Gemäß einer möglichen Ausgestaltung der vorliegenden Erfindung umfasst die Weich-Kunststoff-Komponente quer zur Erstreckung des Gurtelementes verlaufende Noppen- und/oder Wulstelemente.

Gemäß einer möglichen Ausgestaltung der vorliegenden Erfindung umgibt die Hart-Kunststoff-Komponente die Weich-Kunststoff-Komponente rahmenartig und bildet die Seitenkanten des Kunststoffelementes.

Gemäß einer möglichen Ausgestaltung der vorliegenden Erfindung bildet die Hart-Kunststoff-Komponente eines oder mehrere Filmscharniere. Insbesondere werden die oben beschriebenen, die Filmscharniere bildenden Kunststoffbereiche durch die Hartkunststoff-Komponente gebildet. Bevorzugt werden auch an die die Filmscharniere bildenden Kunststoffbereiche anschließende Stegbereiche durch die Hartkunststoff-Komponente gebildet.

Gemäß einer möglichen Ausgestaltung der vorliegenden Erfindung bildet die Hart-Kunststoff-Komponente einen Bereich, in welchem das Gurtelement mit der Komponente fest verbunden und insbesondere vernäht ist.

Gemäß einer möglichen Ausgestaltung der vorliegenden Erfindung erstreckt sich das Gurtband über die gesamte Länge des Kunststoffelementes erstreckt. Dies erhöht die Stabilität des Gurtelementes. Zudem kann dieses einfacher gefertigt werden, da das Gurtband in einem eingespannten Zustand umspritzt werden kann.

Gemäß einer möglichen Ausgestaltung der vorliegenden Erfindung ragt ein freies Ende des Gurtbandes über ein freies Ende des Kunststoffelementes hinaus. Durch das freie Ende des Gurtbandes kann das freie Ende des Kunststoffelementes wieder aus der Tasche der Komponente herausgezogen werden, um die Verbindung zu lösen.

Gemäß einer möglichen Ausgestaltung der vorliegenden Erfindung ist das freie Ende des Gurtbandes in einem Endbereich mit einem zweiten Kunststoffelement umspritzt. Dieses bildet bevorzugt einen Griffbereich.

Gemäß einer möglichen Ausgestaltung der vorliegenden Erfindung weist die Komponente mindestens eine Schlaufe aufweist, durch welche das freie Ende des Gutelementes hindurchgefädelt werden kann, um die Schlaufe mit der mindestens einen Schlaufe der zweiten Komponente zu verbinden.

Hierdurch können die Schlaufen der beiden Komponenten durch das Gurtelement miteinander verflochten werden.

Gemäß einer möglichen Ausgestaltung der vorliegenden Erfindung weist mindestens eine der beiden Komponenten mindestens zwei Schlaufen auf, welche so voneinander beabstandet sind, dass eine Schlaufe der anderen Komponente dazwischen angeordnet werden kann, um die drei Schlaufen über das Gurtelement miteinander zu verflechten.

Der Abstand der beiden Scharnierbereiche zueinander beträgt dabei bevorzugt ein n-faches der Breite der Schlaufen, wobei n bevorzugt eine ungerade Zahl ist, insbesondere 3 oder 5. Das Gurtelement wird daher ein erstes Mal umgelegt, bevor es durch die erste Schlaufe hindurchgeht, und umgelegt, nachdem es aus der letzten Schlaufe heraustritt.

In einer Ausgestaltung der Erfindung verläuft bzw. verlaufen die Schlaufe bzw. Schlaufen in eine erste Richtung, während das Gurtelement in Querrichtung durch die Schlaufe oder Schlaufen hindurch gefädelt wird. Die Querrichtung verläuft hierbei bevorzugt senkrecht zur ersten Richtung.

Insbesondere können in einem Tragsystem, in welchem die vorliegende Erfindung eingesetzt wird, die Schlaufen horizontal verlaufen, wobei das Gurtelement vertikal durch diese hindurchgefädelt wird. Soweit im Rahmen der vorliegenden Anmeldung dabei jedoch an anderer Stelle von vertikal und horizontal gesprochen wird, soll hiermit zunächst nur die relative Ausrichtung der Schlaufen und des Gurtelementes zueinander beschrieben werden, d.h. die erste Richtung und die Querrichtung. Lediglich in einer möglichen Ausgestaltung ist hiermit die absolute Ausrichtung der Schlaufen bzw. des Gurtelementes in der tatsächlichen Tragesituation gemeint.

Die Schlaufen können beispielsweise durch ein Gurtband, welches auf die Komponenten aufgenäht wird, zur Verfügung gestellt werden. Alternativ können die Schlaufen durch Schlitze in einer Materiallage der Komponenten bereitgestellt werden.

Das freie Ende des Kunststoffelementes kann bevorzugt einen Befestigungsbereich aufweisen, in welchem es mit einem Befestigungsbereich der Komponente verbunden wird. Beispielsweise kann dort ein Druckknopf angeordnet sein.

Bevorzugt wird das freie Ende des Kunststoffelementes jedoch in eine Tasche der Komponente eingeschoben, wo es durch die Reibung mit der Tasche fixiert ist. Das Einschieben erfolgt bevorzugt in Richtung auf den Bereich, in welchem das andere Ende des Kunststoffelementes fest mit der Komponente verbunden ist. Bevorzugt erfolgt das Einschieben von unten nach oben.

Die erfindungsgemäße Komponente kann Teil eines normierten Tragsystems sein.

Gemäß einer möglichen Ausgestaltung der vorliegenden Erfindung handelt es sich bei der Komponente um eine PALS-Komponente für ein MOLLE-Tragesystem, wie es von der U.S. Army eingesetzt wird. Hierbei sind die Breite der Schlaufen sowie deren Abstände ebenso normiert wie die Breite des Gurtelementes.

Die vorliegende Erfindung umfasst weiterhin ein Verfahren zur Herstellung eines Gurtelementes für eine Komponente, wie es oben beschrieben wurde.

Gemäß einer möglichen Ausgestaltung der vorliegenden Erfindung wird das Gurtband in eine Spritzgussform eingespannt und in gespanntem Zustand umspritzt, insbesondere mit einer Hartkomponente umspritzt.

Gemäß einer möglichen Ausgestaltung der vorliegenden Erfindung wird das Gurtband in seinen Endbereichen eingespannt.

Gemäß einer möglichen Ausgestaltung der vorliegenden Erfindung werden diese Endbereiche nach dem Anspritzen des Kunststoffelementes abgekappt.

Die vorliegende Erfindung umfasst weiterhin ein Gurtelement, wie es oben im Hinblick auf die erfindungsgemäße Komponente bereits beschrieben wurde, wobei das Gurtelement ein textiles Gurtband und ein Kunststoffelement aufweist, wobei das Kunststoffelement an das Gurtband angespritzt ist.

Gemäß der vorliegenden Erfindung umfasst das Gurtelement zwei Scharnierbereiche, welche daran anschließende Bereiche des Kunststoffelementes verbinden und in welchen das Gurtband umgelegt werden kann und/oder mindestens einen ein Filmscharnier bildenden Kunststoffbereich.

Das Gurtelement kann so ausgebildet sein, wie dies oben bereits beschrieben wurde.

Die vorliegende Erfindung umfasst weiterhin ein Tragesystem mit einer erfindungsgemäßen Komponente, wie sie oben beschrieben wurde, und einer zweiten Komponente, an welcher die erfindungsgemäße Komponente über das Gurtelement lösbar befestigbar ist.

Gemäß einer möglichen Ausgestaltung der vorliegenden Erfindung handelt es sich bei der zweiten Komponente um eine Plattform, insbesondere eine Weste, einen Plattenträger und/oder einen Rucksack.

Gemäß einer möglichen Ausgestaltung der vorliegenden Erfindung handelt es sich bei der Komponente, wie sie oben beschrieben wurde, um ein Transportelement. Insbesondere kann das Transportelement einen Aufnahmeraum aufweisen, in welchem einer oder mehrere Gegenstände aufgenommen werden können, um mittels des Transportelementes transportiert zu werden. Der Aufnahmeraum kann verschließbar sein und/oder durch eine Tasche des Transportelementes gebildet werden.

Gemäß einer möglichen Ausgestaltung der vorliegenden Erfindung ist die Komponente aus textilem Material gefertigt.

Die vorliegende Erfindung wird nun anhand eines Ausführungsbeispiels sowie Zeichnungen näher erläutert.

Dabei zeigen:
- Fig. 1:: ein Ausführungsbeispiel einer erfindungsgemäßen Komponente, welche an einer zweiten Komponente befestigt wird,
- Fig. 2:: ein Ausführungsbeispiel eines erfindungsgemäßen Gurtelements in einer Ansicht von einer ersten Seite,
- Fig. 3:: eine perspektivische Ansicht, welche die in Fig. 2 gezeigte erste Seite zeigt,
- Fig. 4:: das in Fig. 1 und 2 gezeigte Ausführungsbeispiel eines erfindungsgemäßen Gurtelements in einer Draufsicht von einer zweiten Seite,
- Fig. 5:: das erfindungsgemäße Gurtelement in einer perspektivischen Ansicht, welche die in Figur 4 gezeigte zweite Seite zeigt,
- Fig. 6:: das erfindungsgemäße Gurtelement in einem Zwischenstadium des Herstellungsprozesses, in welchem lediglich die Hartkomponente des Kunststoffelementes gespritzt wurde, in einer perspektivischen Ansicht der in Fig. 2 und 3 gezeigten ersten Seite und
- Fig. 7: das erfindungsgemäße Gurtelement in dem auch in Fig. 6 gezeigten Zwischenstadium des Herstellungsprozesses, in einer perspektivischen Ansicht der in Fig. 4 und 5 gezeigten zweiten Seite.

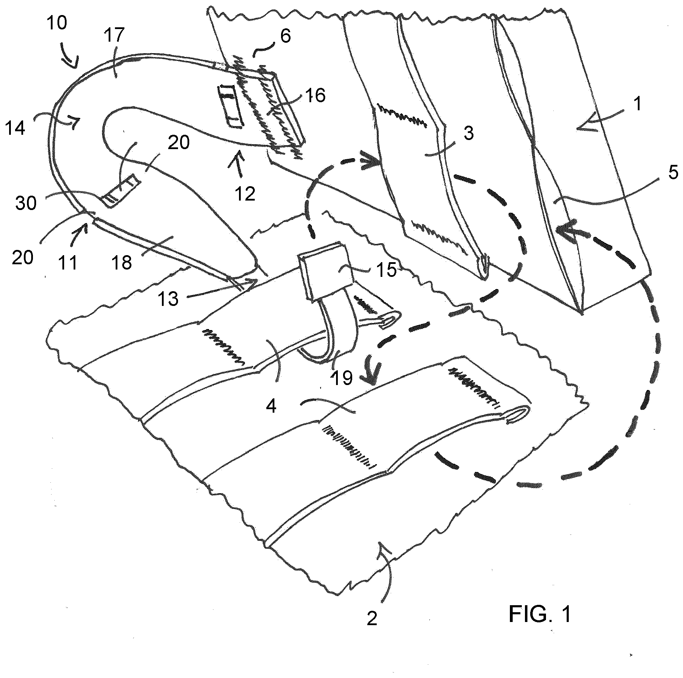

Fig. 1 zeigt ein Ausführungsbeispiel einer erfindungsgemäßen Komponente 1, welche über das Gurtelement 10 an einer zweiten Komponente 2 lösbar befestigt werden kann. Bei der ersten Komponente kann es sich beispielsweise um eine Tasche, einen Munitionsträger und/oder einen Waffenträger handeln, bei der zweiten Komponente beispielsweise um eine Plattform wie eine Weste, einen Plattenträger, eine Tasche oder einen Rucksack handeln.

Das Gurtelement 10 ist mit einem Ende fest an der ersten Komponente 1 befestigt und kann mit seinem freien Ende durch mindestens eine Schlaufe 4, welche an der zweiten Komponente 2 angeordnet ist, hindurchgefädelt werden, um die erste Komponente an der zweiten Komponente zu befestigen. Bevorzugt weist auch die erste Komponente 1 mindestens eine Schlaufe 3 auf, durch welche das Gurtelement hindurchgefädelt wird.

Im Ausführungsbeispiel weist mindestens eine der beiden Komponenten zwei parallel zueinander und/oder in Querrichtung nebeneinander und insbesondere vertikal übereinander angeordnete Schlaufen 4 auf, welche so beabstandet sind, dass eine Schlaufe 3 des anderen Elementes dazwischen angeordnet werden kann. Das Gurtelement wird dabei durch die drei Schlaufen hindurchgefädelt, um diese in der Art eines Kettfadens miteinander zu verflechten.

Im Ausführungsbeispiel weist die zweite Komponente mindestens zwei Schlaufen auf, die erfindungsgemäße Komponente eine Schlaufe. In einer weiteren bevorzugten Ausgestaltung weist die zweite Komponente mindestens drei parallel zueinander und/oder in Querrichtung nebeneinander und insbesondere vertikal übereinander angeordnete Schlaufen auf, die erfindungsgemäße Komponente mindestens zwei parallel zueinander und/oder in Querrichtung nebeneinander und insbesondere vertikal übereinander angeordnete Schlaufen. Es sind auch Konfigurationen mit einer größeren Anzahl von parallel zueinander und/oder in Querrichtung nebeneinander verlaufenden Schlaufen möglich, wobei bevorzugt die erfindungsgemäße Komponente n Schlaufen und die zweite Komponente n+1 Schlaufen aufweist.

Während ein erstes Ende 16 des Gurtelementes an der Komponente 1 in einem Befestigungsbereich 6 fest verbunden, insbesondere mit der Komponente 1 vernäht ist, weist ein zweites Ende des Gurtelementes einen Befestigungsbereich 18 auf, mit welchem er nach dem Durchfädeln durch die Schlaufen lösbar an der ersten Komponente befestigbar ist. Im Ausführungsbeispiel ist hierfür eine Tasche 5 vorgesehen, in welche der Befestigungsbereich 18 eingeschoben werden kann. Die Tasche verläuft dabei von unten nach oben in Richtung auf den Bereich 6, in welchem das Gurtelement mit der Komponente fest verbunden ist.

Sind die beiden Komponenten daher über das Gurtelement miteinander befestigt, ist das Gurtelement zweimal um 180° umgelegt, und zwar einmal unmittelbar bevor es durch die erste Schlaufe der zweiten Komponente hindurch gefädelt wird, und einmal unmittelbar nachdem es die letzte Schlaufe der Komponente oder der zweiten Komponente verlässt und in die Tasche 5 eingeschoben wird.

Die mindestens eine Schlaufe 3 liegt daher in Querrichtung, insbesondere in vertikaler Richtung zwischen dem Befestigungsbereich 6, in welchem das erste Ende 16 des Gurtelementes mit der Komponente fest verbunden ist, und der Tasche 5, in welche der Befestigungsbereich 18 des Gurtelementes lösbar eingeschoben wird.

Die Schlaufen werden im Ausführungsbeispiel über Gurtbänder bereitgestellt, welche in einer ersten Richtung, insbesondere in horizontaler Richtung, entlang der Komponenten verlaufen und durch in Querrichtung, insbesondere in vertikaler Richtung, verlaufende Nähte mit den Komponenten vernäht sind. Alternativ könnten die Schlaufen auch durch Schlitze in einer Materiallage der jeweiligen Komponente zu Verfügung gestellt werden.

Das Gurtelement umfasst ein textiles Gurtband 13 und mindestens ein Kunststoffelement 14, wobei das Kunststoffelement 14 an das Gurtband 13 angespritzt ist. Hierdurch lässt sich die Kombination aus Kunststoffelement und Gurtband kostengünstig und in gleichbleibender Qualität in hoher Stückzahl herstellen. Gegenüber Elementen, welche komplett aus Kunststoff gefertigt sind, ergibt sich eine verbesserte Handhabbarkeit bei gleichzeitig höherer Stabilität sowie eine zusätzliche Sicherungsfunktion.

Das Gurtelement weist im Ausführungsbeispiel zwei Scharnierbereiche 11 und 12 auf, in welchen es wie oben beschrieben jeweils um 180° umgelegt werden kann. Der erste Scharnierbereich 12 ist dabei zwischen dem Bereich 16, in welchem das Gurtelement fest mit der erfindungsgemäßen Komponente verbunden wird, und dem Bereich 17, welcher in der aneinander befestigten Position der beiden Komponenten durch die Schlaufen 4 hindurchgefädelt ist und insbesondere die Schlaufen der beiden Komponenten miteinander verwebt, angeordnet. Der zweite Scharnierbereich 11 ist zwischen dem Bereich 17 und dem Befestigungsbereich 18, mit welchem das Gurtelement lösbar mit der erfindungsgemäßen Komponente verbunden wird, angeordnet.

Im Ausführungsbeispiel ist die Komponente so ausgestaltet, dass sie eine Schlaufe 3 aufweist, welche in Querrichtung, insbesondere in vertikaler Richtung, zwischen zwei Schlaufen 4 der zweiten Komponente angeordnet wird. Der Abstand zwischen dem ersten Scharnierbereich 12, in welchem das Gurtelement das erste Mal um 180° umgelegt wird, und dem zweiten Scharnierbereich 11, in welchem das Gurtelement das zweite Mal um 180° umgelegt wird, beträgt daher drei Schlaufenbreiten.

Alternativ könnte die erfindungsgemäße Komponente beispielsweise auch zwei parallel verlaufende, in Querrichtung nebeneinander und insbesondere vertikal untereinander angeordnete Schlaufen 3 aufweisen, welche bevorzugt mit drei Schlaufen der zweiten Komponente verwebt werden. Der Abstand zwischen den beiden Scharnierbereichen beträgt in diesem Fall fünf Schlaufenbreiten. Es sind auch Konfigurationen mit einer größeren Anzahl von parallel zueinander verlaufenden Schlaufen möglich, wobei bevorzugt bei einer Anzahl von n Schlaufen auf der erfindungsgemäßen Komponente der Abstand zwischen den beiden Scharnierbereichen 2n+1 beträgt.

Die Scharnierbereiche verbinden im Ausführungsbeispiel jeweils zwei Bereiche, in welchen das Gurtelement durch das Gurtband und das Kunststoffelement gebildet wird, miteinander.

In einer ersten Ausführungsform, welche in den Zeichnungen nicht dargestellt ist, weist das Kunststoffelement drei voneinander getrennte Bereiche 16, 17 und 18 auf, welche in den Scharnierbereichen 11 und 12 lediglich durch das durchgehende Gurtband miteinander verbunden werden.

Im Ausführungsbeispiel handelt es sich bei dem Kunststoffelement 14 jedoch um ein zusammenhängendes Element, welches sich durchgehend über die Bereiche 16, 17 und 18 erstreckt, wobei das Kunststoffelement in den Scharnierbereichen als Filmscharnier ausgeführt ist. Insbesondere umfasst es in den Scharnierbereichen jeweils Kunststoffbereiche, welche gegenüber den übrigen Bereichen dünner ausgeführt sind und daher ein Filmscharnier bilden.

Im Ausführungsbeispiel ist das Kunststoffelement 14 breiter als das Gurtband 13, wobei in den Scharnierbereichen jeweils auf beiden Seiten des Gurtbandes 13 als Filmscharnier dienende Kunststoffbereiche 20 vorgesehen sind.

Im Ausführungsbeispiel ist das Gurtband im Scharnierbereich nicht umspritzt. Der nicht umspritzte Bereich 21 des Gurtbandes verläuft in einer Aussparung 30 im Kunststoffelement zwischen den als Filmscharnier dienenden Kunststoffbereichen 20.

Das Gurtband 13 erstreckt sich über den Befestigungsbereich 18 des Gurtelementes hinaus und ist in diesem Bereich 19 nicht umspritzt. Die hierdurch gebildete Gurtlasche dient dazu, den Befestigungsbereich 18 wieder aus der Tasche 5 herausziehen zu können. Das Gurtband 13 wird daher beim Hineinschieben des Befestigungsbereiches 18 in die Lasche am Ende des Kunststoffelementes umgelegt und in dieser umgelegten Stellung in die Tasche eingeschoben, so dass das freie Ende des Gurtbandes aus der Tasche 5 herausschaut. Im Ausführungsbeispiel ist an diesem freien Ende des Gurtbandes ein zweites Kunststoffelement 15 angespritzt, welches als Griffbereich zum Hindurchfädeln des Gurtelementes durch die Schlaufen und zum Herausziehen des Befestigungsbereiches aus der Tasche 5 dient.

Im Befestigungsbereich 18 verjüngt sich das Kunststoffelement 14 bevorzugt in Richtung auf sein freies Ende hin, um ein Hindurchfädeln durch die Schlaufen und ein Einschieben in die Tasche zu erleichtern.

Bei der erfindungsgemäßen Komponente kann es sich insbesondere um eine PALS-Komponente für ein MOLLE-Tragesystem handeln.

Hierbei sind insbesondere die Abstände und Breiten der Schlaufen 3 und 4 sowie die Breite des Gurtelementes 10 normiert, so dass unterschiedlichste Komponenten an einer zweiten Komponente angeordnet werden können. Die zweite Komponente weist dabei üblicherweise eine größere Anzahl von in Querrichtung nebeneinander und insbesondere vertikal übereinander angeordneten Schlaufenreihen auf, um an ihr unterschiedliche erfindungsgemäße Komponenten in unterschiedlichen Positionen anordnen zu können.

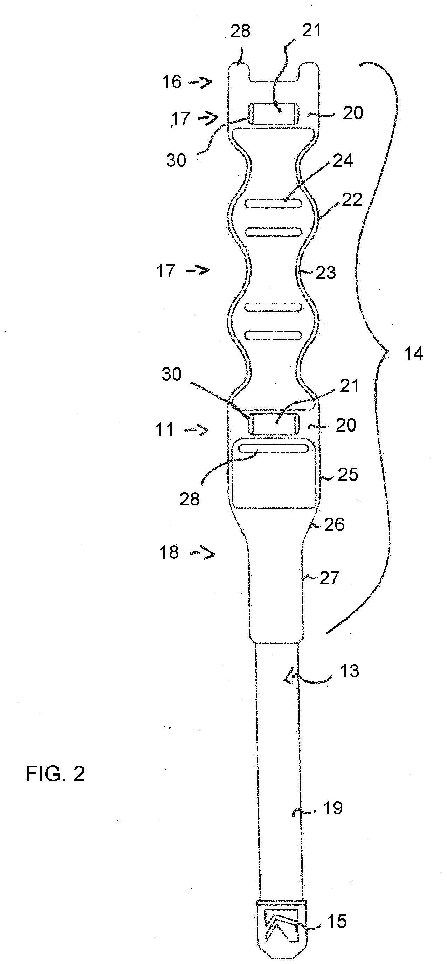

Ein Ausführungsbeispiel eines erfindungsgemäß einsetzbaren Gurtelementes wird nun anhand von Figuren 2 - 5 näher beschrieben. Es weist dabei zunächst jenen Grundaufbau auf, welcher oben bereits im Hinblick auf Fig. 1 für das Gurtelement näher erläutert wurde. Insbesondere umfasst er dabei ein Gurtband 13, an welchem ein Kunststoffelement 14 angespritzt ist.

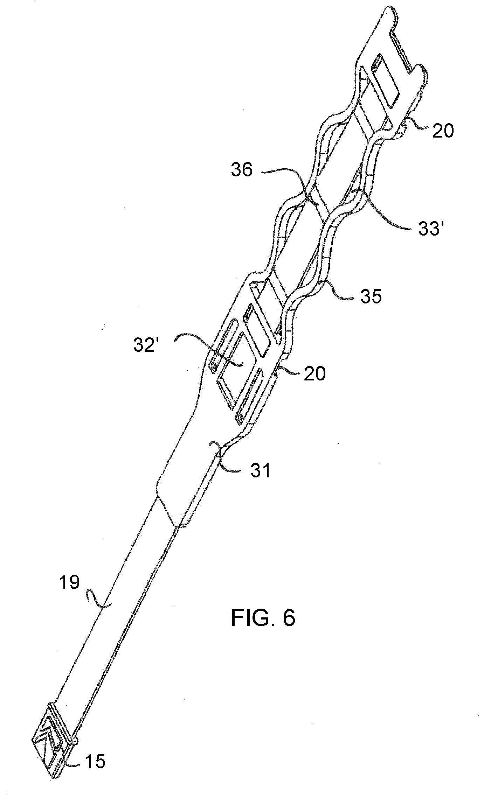

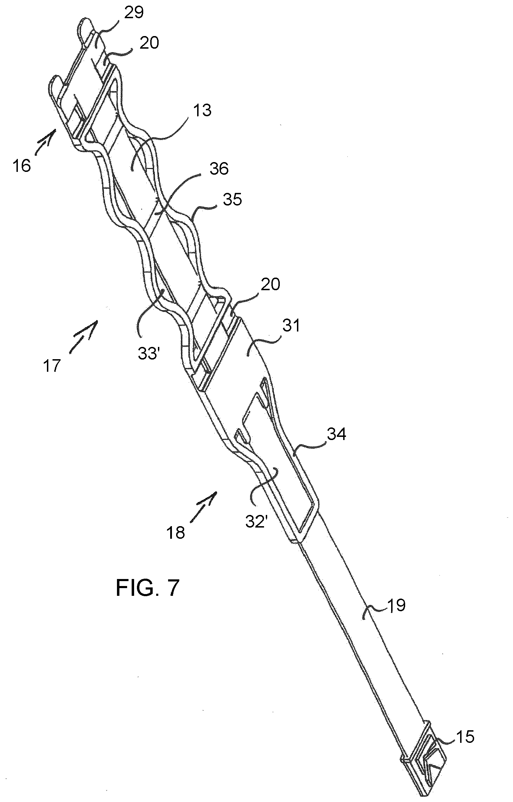

Bei dem in Figuren 2 bis 5 gezeigten Ausführungsbeispiel verläuft das textile Gurtband 13 über die gesamte Länge des Gurtelementes. Dies erleichtert die Herstellung, da das Gurtelement in die Spritzgussform, in welcher es umspritzt wird, eingespannt werden kann. Insbesondere können dabei äußere Enden des Gurtbandes eingespannt und dann das Gurtband in einem weiter innen gelegenen Bereich umspritzt werden. Die zum Einspannen verwendeten Enden können dann gekappt werden. Nähere Details zum Herstellungsverfahren werden im Folgenden noch unter Bezugnahme auf Figuren 6 und 7 erläutert.

Das Kunststoffelement 14, mit welchem das Gurtband 13 umspritzt wird, weist wie oben beschreiben drei Bereiche 16, 17 und 18 auf, zwischen welchen die Scharnierbereiche 12 und 11 angeordnet sind.

Im Bereich 16 wird das Gurtelement mit der Komponente fest verbunden, insbesondere vernäht. Hierfür weist das Kunststoffelement ein Stegbereich 29 auf, in welchem sich das Kunststoffelement über die gesamte Breite des Gurtelementes erstreckt und in einem mittleren Bereich das Gurtband zumindest teilweise umgibt.

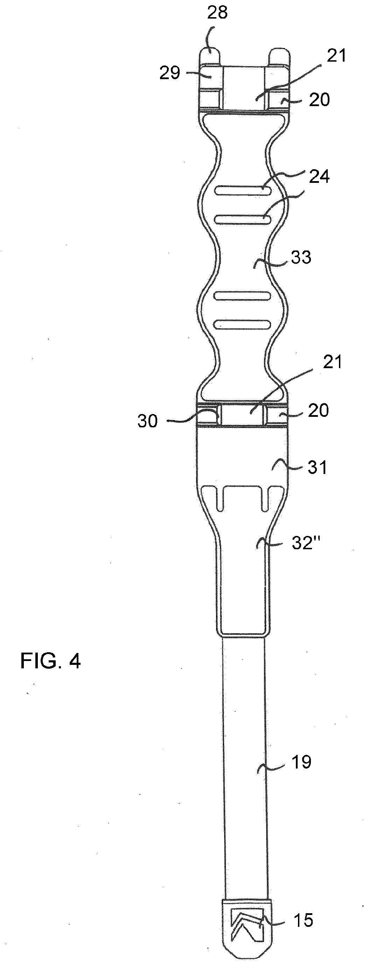

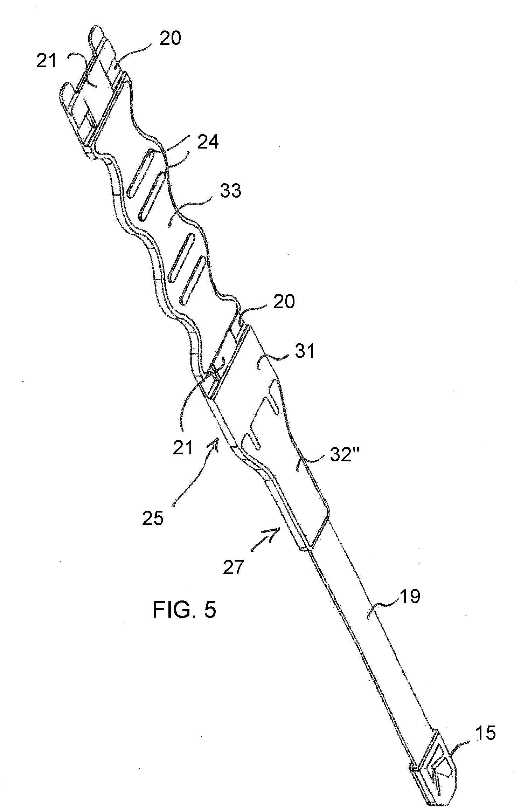

Im Ausführungsbeispiel ist das Gurtband im Bereich des Steges 29 lediglich auf einer ersten der beiden Hauptflächen umspritzt, während auf der gegenüberliegenden zweiten, in Figuren 4 und 5 gezeigten Seite das Gurtelement bündig mit den seitlichen Elementen des Steges verläuft, und daher allenfalls von geringen seitlich eindringenden Kunststoffmengen umspritzt ist. Hierdurch wird die Dicke des Stegbereiches verringert, was das Vernähen vereinfacht. Im Stegbereich 29 ist das Gurtband im Querschnitt daher lediglich auf drei Seiten umspritzt.

Weiterhin sind hier seitliche Laschen 28 des Kunststoffelementes vorgesehen, welche über das mittig angeordnete Ende des Gurtbandes in Längsrichtung hinausgehen und in welchen das Kunststoffelement noch einmal separat mit der Komponente vernäht werden kann.

Das Gurtelement kann in einer ersten Variante mit dem Bereich 16 auf der Komponente aufgesetzt mit so mit dieser vernäht sein. In diesem Fall werden die beiden Laschen genutzt, um den Bereich 16 mit einer zweiten Naht an der Komponente zu sichern. In einer zweiten Variante kann das Gurtelement zwischen zwei Lagen der Komponente gesetzt und so mit diesen vernäht werden. Bei einer solchen zwischengesetzten Anbindung ist die Naht im Bereich des Steges 29 ausreichend.

Im Bereich 17, welcher die Schlaufen mit einander verflechtet, weist das Kunststoffelement eine Wellenform seiner Außenkontur auf. Hierbei wechseln sich Wellenbäuche 22, in welchem das Kunststoffelement seine größte Breite hat, und Wellentäler 23, in welchen es seine geringste Breite hat, ab.

Die Wellenbäuche 22 sind dort angeordnet, wo im Befestigungszustand das Gurtelement aus einer Schlaufe heraustritt und in die nächste Schlaufe hinein tritt. Durch die volle Breite in diesem Bereich wird die Befestigung zwischen den Schlaufen verbessert.

Weiterhin sind beidseitig des Wellenbauches 22 quer zur Erstreckung des Gurtelementes verlaufende Wulstbereiche 24 vorgesehen, welche für eine erhöhte Reibung und damit einer sichereren Befestigung an den Schlaufen sorgen.

Die quer verlaufenden Wülste 24 sind auf beiden Hauptflächen des Gurtelementes angeordnet.

Im dritten Bereich 18, welcher in die Tasche 5 eingeschoben wird, weist das Kunststoffelement eine sich ausgehend von dem Scharnierbereich 11 verschmälernde Form auf. Im konkreten Ausführungsbeispiel ist dabei ein erster, breiterer Bereich 25 vorgesehen, welcher an den Scharnierbereich 11 anschließt, sowie ein zweiter, das freie Ende bildende schmälerer Bereich 27, wobei der erste und der zweite Bereich durch einen Übergangsbereich 26, in welchem die Breite allmählich abnimmt, verbunden sind.

Wie insbesondere aus Figur 5 ersichtlich, verbinden die Bereiche 20, welche ein Filmscharnier bilden, jeweils Bereiche des Kunststoffelementes, welche eine größere Dicke aufweisen als die Bereiche 20. Die Länge der Bereiche 20 ist dabei so gewählt, dass das Gurtelement hier um 180 Grad umgelenkt werden kann, und die durch die Scharnierbereiche verbundenen Bereiche des Kunststoffelementes aufeinandergelegt werden können.

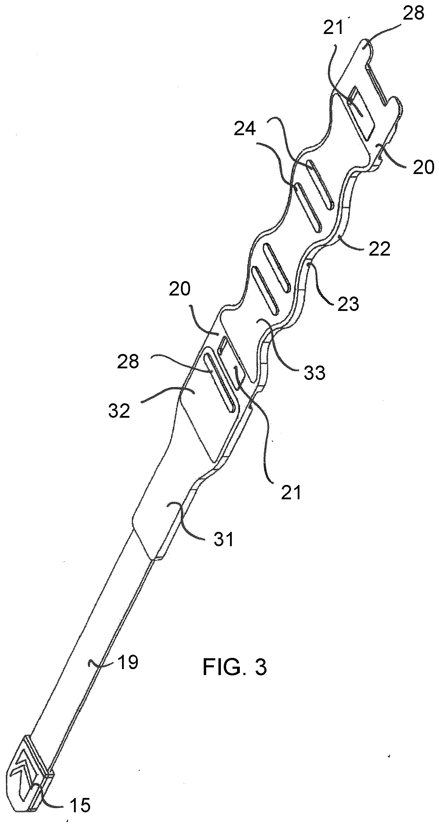

Wie insbesondere aus Figur 3 ersichtlich, verläuft eine erste Seite der das Filmscharnier bildenden Bereiche 20 bündig mit der beispielsweise in Figur 2 gezeigten ersten Hauptfläche des Gurtelementes. Auf der in Figuren 4 und 5 gezeigten zweiten Hauptfläche ist das Kunststoffelement dagegen im Bereich 20 mit Aussparungen versehen, durch welche die Dicke des Kunststoffelement im Bereich des Filmscharniers entsprechend verringert wurde.

Im Ausführungsbeispiel ist die zweite Hauptfläche dabei jene, welche im Bereich 16 auf der Komponente aufliegt. Das Umlegen des Gutelementes erfolgt daher so, dass jeweils Bereiche der ersten Hauptfläche aufeinander gefaltet werden.

Das Kunststoffelement 14 ist als zwei-Komponenten-Spritzgussteil gefertigt. Hierfür wird zunächst eine Hartkunststoffkomponente an das Gurtband angespritzt. Das so hergestellte Zwischenprodukt wird dann in eine zweite Spritzgussform eingelegt, um die Weichkunststoffkomponente anzuspritzen.

Wie bereits oben beschrieben wird das Gurtband 13 hierfür in der ersten Spritzgussform eingespannt, um die Hartkunststoffkomponente anzuspritzen. Ein Einspannen in der zweiten Spritzgussform ist nicht mehr zwingend nötig, da das Gurtband bereits durch die Hartkunststoffkomponente fixiert ist.

Das Gurtband mit der angespritzten Hartkunststoffkomponente ist in Figuren 6 und 7 gezeigt.

Durch die Hartkunststoffkomponente werden zum einen die Bereiche 20, welche die Filmscharniere bilden, bereitgestellt, sowie daran angrenzende, sich über die gesamte Breite der Kunststoffelemente erstreckende Stegbereiche.

In jenen Bereichen der Scharnierbereiche, in welchen das Gurtband verläuft, welches dort nicht umspritzt ist, weist die Hartkomponente jeweils eine Aussparung 30 auf.

Ebenfalls durch die Hartkunststoffkomponente gebildet wird der Bereich 16.

Im Bereich 17 bildet die Hartkunststoffkomponente einen Rahmen, in welchen die Weichkunststoffkomponente eingespritzt wird. Insbesondere wird dabei die seitliche Begrenzung 35 durch die Hartkunststoffkomponente gebildet. Im Bereich der Wellentäler sind zudem Stegelemente 36 vorgesehen, in welchen das Gurtband durch die Hartkunststoffkomponente umspritzt ist. In den übrigen Bereichen 33' liegt das Gurtband dagegen frei und wird dann durch die Weichkunststoffkomponente umspritzt.

Wie aus Figuren 2 - 5 ersichtlich, bildet die Weichkunststoffkomponente 33 im Bereich 17 die beiden Hauptflächen des Gurtelementes. Auch die Wulstelemente 24 werden durch die Weichkunststoffkomponente gebildet.

Im Bereich 18 weist die Hartkunststoffkomponente jeweils Aussparungen 32' auf, welche mit der Weichkunststoffkomponente 32 ausgespritzt werden. Auch hier umgibt die Hartkunststoffkomponente die Weichkunststoffkomponente rahmenartig und bildet die seitlichen Begrenzungen des Kunststoffelementes. Das Wulstelement 28 wird dagegen durch die Weichkomponente gebildet.

In dem ersten, an den Scharnierbereich anschließenden Bereich 25 ist nur auf der ersten Hauptfläche das Weichkunststoffelement 32 vorgesehen, während die gegenüberliegende Hauptfläche 31 durch das Hartkunststoffelement gebildet wird. Im zweiten, schmäleren Bereich 27 sowie im Übergangsbereich ist das Weichkunststoffelement 31" dagegen auf der zweiten Hauptfläche angeordnet, während die gegenüberliegende Hauptfläche 31 durch das Hartkunststoffelement gebildet wird. In den jeweiligen Aussparungen 32' für die beiden Weichkunststoffkomponenten liegt das Gurtband offen, und wird damit auf drei Seiten durch die Hartkunststoffkomponente umspritzt. Die vierte Seite wird durch die Weichkunststoff-Komponente umspritzt.

Die Weichkunststoffkomponenten erhöhen zum einen die Griffigkeit des Gurtelementes bei der Handhabung. Die entscheidende Funktion der Weichkunststoffkomponenten ist jedoch die erhöhte Reibung des Gurtelementes mit den Schlaufen beziehungsweise der Tasche der Komponente. Diese erhöhte Reibung verhindert, dass sich das Gurtelement aus seiner Befestigungsstellung herausbewegt und die Verbindung gelöst wird. Dementsprechend sind die Weichkunststoffkomponenten jeweils dort angeordnet, wo eine erhöhte Reibung benötigt wird, wobei die Reibung gegebenenfalls durch die Wulstelemente noch erhöht wird.

Das Band zum Herausziehen des freien Endes 18 des Kunststoffelementes aus der Tasche wird durch den Bereich 19 des Gurtbandes zur Verfügung gestellt, welcher aus dem Kunststoffelemente herausgeführt und nicht umspritzt ist. Der Bereich 19 des Gurtbandes weist an seinem freien Ende ein als Kunststoffelement 15 ausgebildetes Griffelement auf, welches im Ausführungsbeispiel zumindest teilweise aus Hartkunststoff hergestellt wird und dessen Hartkunststoffkomponente zusammen mit der Hartkunststoffkomponente des Kunststoffelementes 14 in der ersten Spritzgussform gefertigt wird. Die Hartkunststoffkomponente des Kunststoffelementes 15 weist im Ausführungsbeispiel Aussparungen auf, welche dann zusammen mit der Weichkunststoffkomponente des Kunststoffelementes 14 in der zweiten Spritzgussform mit der Weichkomponente ausgefüllt werden.

Für das Gurtband, die Hartkunststoffkomponente und die Weichkunststoffkomponente können sämtliche gängigen Materialien eingesetzt werden.

## Patentansprüche

1. Komponente (1) eines Tragsystems mit einem Gurtelement (10), welches mit einem ersten Ende (16) an der Komponente (1) befestigt ist und ein zweites, freies Ende aufweist, mit welchem es durch mindestens eine Schlaufe (4) einer zweiten Komponente (2) hindurchgefädelt werden kann, um die Komponenten (1, 2) aneinander zu befestigen, wobei das Gurtelement (10) ein textiles Gurtband (13) und ein Kunststoffelement (14) umfasst,
**dadurch gekennzeichnet,**
**dass** das Kunststoffelement (14) an das Gurtband (13) angespritzt ist, wobei das Gurtelement (10) mindestens einen Scharnierbereich (11, 12) umfasst, welcher daran anschließende Bereiche (16, 17, 18) des Kunststoffelementes (14) verbindet und in welchen das Gurtband (13) umgelegt werden kann, und/oder wobei das Kunststoffelement (14) mindestens einen als Filmscharnier dienenden Kunststoffbereich (20) umfasst.

2. Komponente nach Anspruch 1, wobei das Gurtelement (10) mindestens zwei Scharnierbereiche (11, 12) umfasst, welche daran anschließende Bereiche (16, 17, 18) des Kunststoffelementes (14) verbinden und in welchen das Gurtband (13) umgelegt werden kann.

3. Komponente nach Anspruch 2, wobei das Kunststoffelement (14) in dem oder den Scharnierbereichen (16, 17, 18) jeweils mindestens einen ein Filmscharnier bildenden Kunststoffbereich (20) umfasst, welcher bevorzugt Kunststoffbereiche (16, 17, 18) des Kunststoffelements (14) miteinander verbindet, in welchen das Kunststoffelement (14) eine größere Materialstärke aufweist als in dem das Filmscharnier bildenden Kunststoffbereich (20), wobei das Gurtband (13) bevorzugt in den Kunststoffbereichen (16, 17, 18) mit größerer Materialstärke durch das Kunststoffelement (14) umspritzt ist.

4. Komponente nach Anspruch 3, wobei das Kunststoffelement (14) breiter ist als das Gurtband (13) und in dem oder den Scharnierbereichen (11, 12) auf beiden Seiten des Gurtbandes (13) jeweils einen als Filmscharnier dienenden Kunststoffbereich (20) umfasst, wobei bevorzugt das Gurtband (13) im Scharnierbereich (11, 12) nicht umspritzt ist und in einer Aussparung im Kunststoffelement (14) zwischen den als Filmscharnier dienenden Kunststoffbereichen (20) verläuft.

5. Komponente nach einem der vorangegangenen Ansprüche, wobei das Kunststoffelement (14) mindestens zwei Bereiche (16, 17, 18) umfasst, zwischen welchen ein Scharnierbereich (11,12) vorgesehen ist, wobei das Kunststoffelement bevorzugt mindestens drei Bereiche (16, 17, 18) umfasst, zwischen welchen jeweils ein Scharnierbereich (11, 12) vorgesehen ist.

6. Komponente nach Anspruch 5, wobei ein erster Bereich (17) so angeordnet ist, dass er sich in einer durch die mindestens eine Schlaufe (4) der zweiten Komponente (2) hindurchgefädelten Position befindet, wenn die Komponente (1) an der zweiten Komponente (2) befestigt, und/oder ein zweiter Bereich (18), welcher bevorzugt ein freies Ende des Kunststoffelementes bildet, zur lösbaren Fixierung des Gurtelementes (1) in der hindurchgefädelten Stellung dient und bevorzugt in eine Tasche (5) der Komponente (1) einschiebbar ist, und/oder wobei das Gurtelement in einem dritten Bereich (16) mit der Komponente (1) fest verbunden und bevorzugt vernäht ist.

7. Komponente nach einem der vorangegangenen Ansprüche, wobei das Kunststoffelement (14) als Mehr-Komponenten-Spritzgussteil ausgeführt ist, wobei bevorzugt das Kunststoffelement eine äußere Struktur aus einer Hart-Kunststoff-Komponente umfasst, in welche eine Weich-Kunststoff-Komponente (33) eingespritzt ist, wobei bevorzugt die Hart-Kunststoff-Komponente die Weich-Kunststoff-Komponente (33) rahmenartig umgibt und die Seitenkanten des Kunststoffelementes bildet.

8. Komponente nach Anspruch 7, wobei die Weich-Kunststoff-Komponente (33) zumindest in einem Teilbereich des Kunststoffelementes (14) eine Ober- und/oder Unterseite des Kunststoffelementes (14) bildet und/oder quer zur Erstreckung des Gurtelementes verlaufende Noppen- und/oder Wulstelemente (24) umfasst.

9. Komponente nach Anspruch 7 oder 8, wobei die Hart-Kunststoff-Komponente eines oder mehrere Filmscharniere (20) und/oder einen Bereich (16), in welchem das Gurtelement mit der Komponente verbunden und insbesondere vernäht ist, bildet.

10. Komponente nach einem der vorangegangenen Ansprüche, wobei sich das Gurtband (13) über die gesamte Länge des Kunststoffelementes (14) erstreckt.

11. Komponente nach einem der vorangegangenen Ansprüche, wobei ein freies Ende des Gurtbandes (13) über ein freies Ende des Kunststoffelementes (14) hinausragt, wobei das freie Ende bevorzugt in einem Endbereich mit einem zweiten Kunststoffelement (15) umspritzt ist.

12. Komponente nach einem der vorangegangenen Ansprüche, wobei die Komponente (1) mindestens eine Schlaufe (3) aufweist, durch welche das freie Ende des Gutelementes (10) hindurchgefädelt werden kann, um die Schlaufe (3) mit der mindestens einen Schlaufe (4) der zweiten Komponente (2) zu verbinden, und/oder wobei es sich bei der Komponente (1) um eine PALS-Komponente für ein MOLLE-Tragesystem handelt.

13. Gurtelement (10) für eine Komponente (1) nach einem der Ansprüche 1 bis 12, wobei das Gurtelement (10) ein textiles Gurtband (13) und ein Kunststoffelement (14) aufweist, wobei das Kunststoffelement (14) an das Gurtband (13) angespritzt ist, wobei das Gurtelement (10) zwei Scharnierbereiche (11, 12), welche daran anschließende Bereiche (16, 17, 18) des Kunststoffelementes (14) verbinden und in welchen das Gurtband (13) umgelegt werden kann, umfasst, und/oder wobei das Kunststoffelement (14) mindestens einen als Filmscharnier dienenden Kunststoffbereich (20) umfasst.

14. Verfahren zur Herstellung eines Gurtelementes nach Anspruch 13, wobei das Gurtband (13) in eine Spritzgussform eingespannt und in gespanntem Zustand umspritzt wird, insbesondere mit einer Hartkomponente umspritzt wird, wobei bevorzugt das Gurtband (13) in seinen Endbereichen eingespannt wird, wobei diese Endbereiche nach dem Anspritzen des Kunststoffelementes (14) abgekappt werden.

15. Tragesystem mit einer Komponente (1) nach einem der Ansprüche 1 bis 12 und einer zweiten Komponente (2), an welcher die erfindungsgemäße Komponente (1) über das Gurtelement (10) lösbar befestigbar ist, wobei es sich bei der zweiten Komponente (2) bevorzugt um eine Plattform handelt, insbesondere eine Weste, einen Plattenträger und/oder einen Rucksack, und/oder wobei es sich bei der Komponente (1) nach einem der Ansprüche 1 bis 12 um ein Transportelement handelt, welches bevorzugt aus textilem Material gefertigt ist.

## Claims

1. Component (1) of a carrier system comprising a strap element (10) which is fastened to the component (1) by a first end (16) and comprises a second free end, by means of which it can be threaded through at least one loop (4) of a second component (2) in order to fasten the components (1, 2) to one another, wherein the strap element (10) comprises a textile belt strap (13) and a plastics element (14),
**characterised in that**
the plastics element (14) is moulded onto the belt strap (13), wherein the strap element (10) comprises at least one hinge region (11, 12)which connects regions (16, 17, 18) of the plastics element (14) adjoining said hinge region and in which the belt strap (13) can be turned, and/or wherein the plastics element (14) comprises at least one plastics region (20) which serves as a film hinge.

2. Component according to claim 1, wherein the strap element (10) comprises at least two hinge regions (11, 12) which connect regions (16, 17, 18) of the plastics element (14) adjoining said hinge regions, and in which the belt strap (13) can be turned.

3. Component according to claim 2, wherein the plastics element (14) comprises, in each case, in the hinge region(s) (16, 17, 18), at least one plastics region (20) which forms a film hinge and preferably interconnects plastics regions (16, 17, 18) of the plastics element (14) in which the plastics element (14) is of a greater material thickness than in the plastics region (20) forming the film hinge, wherein the belt strap (13) is preferably overmoulded by the plastics element (14) in the plastics regions (16, 17, 18) of greater material thickness.

4. Component according to claim 3, wherein the plastics element (14) is wider than the belt strap (13) and in each case comprises one plastics region (20) , serving as a film hinge, in the hinge region(s) (11, 12), on both sides of the belt strap (13), wherein the belt strap (13) is preferably not overmoulded in the hinge region (11, 12) and extends, in a recess in the plastics element (14), between the plastics regions (20) serving as the film hinge.

5. Component according to any one of the preceding claims, wherein the plastics element (14) comprises at least two regions (16, 17, 18) between which a hinge region (11, 12) is provided, wherein the plastics element preferably comprises at least three regions (16, 17, 18), between which one hinge region (11, 12) is provided in each case.

6. Component according to claim 5, wherein a first region (17) is arranged such that it is located in a position threaded through the at least one loop (4) of the second component (2), when the component (1) is fastened to the second component (2), and/or a second region (18), which preferably forms a free end of the plastics element, for detachably fixing the strap element (1) in the threaded-through position and is preferably insertable into a pocket (5) of the component (1), and/or wherein the strap element is rigidly connected, and preferably sewn, to the component (1) in a third region (16).

7. Component according to any one of the preceding claims, wherein the plastics element (14) is designed as a multi-component injection-moulded part, wherein the plastics element preferably comprises an outer structure consisting of a hard plastics component into which a soft plastics component (33) is injected, wherein the hard plastics component preferably surrounds the soft plastics component (33) in a frame-like manner and forms the lateral edges of the plastics element.

8. Component according to claim 7, wherein the soft plastics component (23) forms an upper and/or lower face of the plastics element (14), at least in a portion of the plastics element (14), and/or comprises nub and/or bead elements (24) extending transversely to the extension of the strap element.

9. Component according to either claim 7 or claim 8, wherein the hard plastics component forms one or more film hinges (20) and/or a region (16) in which the strap element is connected, and in particular sewn, to the component.

10. Component according to any one of the preceding claims, wherein the belt strap (13) extends over the entire length of the plastics element (14).

11. Component according to any one of the preceding claims, wherein a free end of the belt strap (13) protrudes beyond a free end of the plastics element (14), wherein the free end is preferably overmoulded, in an end region, with a second plastics element (15).

12. Component according to any one of the preceding claims, wherein the component (1) comprises at least one loop (3), through which the free end of the strap element (10) can be threaded, in order to connect the loop (3) to the at least one loop (4) of the second component (2), and/or wherein the component (1) is a PALS component for a MOLLE carrier system.

13. Strap element (10) for a component (1) according to any one of claims 1 to 12, wherein the strap element (10) comprises a textile belt strap (13) and a plastics element (14), wherein the plastics element (14) is moulded onto the belt strap (13), wherein the strap element (10) preferably comprises two hinge regions (11, 12), which connect regions (16, 17, 18) of the plastics element (14) adjoining said hinge regions, and in which the belt strap (13) can be turned, and/or wherein the plastics element (14) comprises at least one plastics region (20) that serves as a film hinge.

14. Method for producing a strap element according to claim 13, wherein the belt strap (13) is clamped in an injection mould and overmoulded in the clamped state, in particular overmoulded with a hard component, wherein the belt strap (13) is preferably clamped in the end regions thereof, wherein said end regions are capped after the plastics element (14) has been moulded on.

15. Carrier system, comprising a component (1) according to any one of claims 1 to 12 and a second component (2) to which the component (1) according to the invention can be detachably fastened via the strap element (10), wherein the second component (2) is preferably a platform, in particular a waistcoat, a plate carrier and/or a backpack, and/or wherein the component (1) according to any one of claims 1 to 12 is a transport element which is preferably produced from textile material.

## Revendications

1. Composant (1) d'un système de support doté d'un élément formant sangle (10), qui est fixé avec une première extrémité (16) au composant (1) et qui présente une seconde extrémité libre avec laquelle il peut être enfilé dans au moins une boucle (4) d'un second composant (2) pour fixer l'un à l'autre les composants (1, 2), l'élément formant sangle (10) comprenant une bande de sangle (13) textile et un élément en matière plastique (14),
**caractérisé en ce que**
l'élément en matière plastique (14) est injecté sur la bande de sangle (13), l'élément formant sangle (10) comprenant au moins une zone de charnière (11, 12) qui relie des zones (16, 17, 18) de l'élément en matière plastique (14) adjacentes à celle-ci et dans laquelle la bande de sangle (13) peut être pliée et/ou l'élément en matière plastique (14) comprenant au moins une zone en matière plastique (20) servant de charnière souple.

2. Composant selon la revendication 1, dans lequel l'élément formant sangle (10) comprend au moins deux zones de charnière (11, 12) qui relient des zones (16, 17, 18) de l'élément en matière plastique (14) adjacentes à celles-ci et dans lesquelles la bande de sangle (13) peut être pliée.

3. Composant selon la revendication 2, dans lequel l'élément en matière plastique (14) comprend, dans la ou les zones de charnière (16, 17, 18), respectivement au moins une zone en matière plastique (20) formant une charnière souple, qui relie de préférence des zones en matière plastique (16, 17, 18) de l'élément en matière plastique (14) les unes aux autres, dans lesquelles l'élément en matière plastique (14) présente une épaisseur de matériau plus importante que dans la zone en matière plastique (20) formant la charnière souple, la bande de sangle (13) étant de préférence surmoulée par l'élément en matière plastique (14) dans les zones en matière plastique (16, 17, 18) ayant une épaisseur de matériau plus importante.

4. Composant selon la revendication 3, dans lequel l'élément en matière plastique (14) est plus large que la bande de sangle (13) et comprend, dans la ou les zones de charnière (11, 12), sur les deux côtés de la bande de sangle (13), respectivement une zone en matière plastique (20) servant de charnière souple, la bande de sangle (13) n'étant de préférence pas surmoulée dans la zone de charnière (11, 12) et s'étendant dans un évidement situé dans l'élément en matière plastique (14) entre les zones en matière plastique (20) servant de charnière souple.

5. Composant selon l'une des revendications précédentes, dans lequel l'élément en matière plastique (14) comprend au moins deux zones (16, 17, 18) entre lesquelles est prévue une zone de charnière (11, 12), l'élément en matière plastique comprenant de préférence au moins trois zones (16, 17, 18) entre chacune desquelles est prévue une zone de charnière (11, 12).

6. Composant selon la revendication 5, dans lequel une première zone (17) est agencée de façon à se trouver dans une position enfilée dans l'au moins une boucle (4) du second composant (2), quand le composant (1) est fixé au second composant (2) et/ou une seconde zone (18), qui forme de préférence une extrémité libre de l'élément en matière plastique, sert à la fixation détachable de l'élément formant sangle (1) dans la position enfilée et peut de préférence être insérée dans une poche (5) du composant (1), et/ou dans lequel l'élément formant sangle est fixé solidement et de préférence cousu au composant (1) dans une troisième zone (16).

7. Composant selon l'une des revendications précédentes, dans lequel l'élément en matière plastique (14) est réalisé sous la forme d'une pièce moulée par injection à plusieurs composants, l'élément en matière plastique comprenant de préférence une structure externe constituée d'un composant en matière plastique dure, dans lequel un composant en matière plastique souple (33) est injecté, le composant en matière plastique dure entourant de préférence le composant en matière plastique souple (33) à la manière d'un cadre et formant les bords latéraux de l'élément en matière plastique.

8. Composant selon la revendication 7, dans lequel le composant en matière plastique souple (33) forme, au moins dans une partie de l'élément en matière plastique (14) une face supérieure et/ou inférieure de l'élément en matière plastique (14) et/ou comprend des éléments de noppe et/ou de renflement (24) s'étendant transversalement à la longueur de l'élément formant sangle.

9. Composant selon la revendication 7 ou 8, dans lequel le composant en matière plastique dure forme une ou plusieurs charnières souples (20) et/ou une zone (16) dans laquelle l'élément formant sangle est relié et en particulier cousu au composant.

10. Composant selon l'une des revendications précédentes, dans lequel la bande de sangle (13) s'étend sur toute la longueur de l'élément en matière plastique (14).

11. Composant selon l'une des revendications précédentes, dans lequel une extrémité libre de la bande de sangle (13) dépasse au-delà d'une extrémité libre de l'élément en matière plastique (14), l'extrémité libre étant de préférence surmoulée avec un second élément en matière plastique (15) dans une zone d'extrémité.

12. Composant selon l'une des revendications précédentes, dans lequel le composant (1) présente au moins une boucle (3) dans laquelle l'extrémité libre de l'élément formant sangle (10) peut être enfilée pour relier la boucle (3) à l'au moins une boucle (4) du second composant (2), et/ou dans lequel le composant (1) est un composant PALS pour un système de support MOLLE.

13. Élément formant sangle (10) pour un composant (1) selon l'une des revendication 1 à 12, dans lequel l'élément formant sangle (10) présente une bande de sangle (13) textile et un élément en matière plastique (14), l'élément en matière plastique (14) étant injecté sur la bande de sangle (13), l'élément formant sangle (10) comprenant deux zones de charnière (11, 12) qui relient des zones (16, 17, 18) de l'élément en matière plastique (14) adjacentes à celles-ci et dans lesquelles la bande de sangle (13) peut être pliée et/ou dans lequel l'élément en matière plastique (14) comprend au moins une zone en matière plastique (20) servant de charnière souple.

14. Procédé de fabrication d'un élément formant sangle selon la revendication 13, dans lequel la bande de sangle (13) est serrée dans un moule de moulage par injection et est surmoulée dans l'état tendu, en particulier surmoulée avec un composant dur, la bande de sangle (13) étant de préférence serrée dans ses zones d'extrémité, lesdites zones d'extrémité étant coupées après l'injection de l'élément en matière plastique (14).

15. Système de support doté d'un composant (1) selon l'une des revendications 1 à 12 et d'un second composant (2), auquel le composant (1) selon l'invention peut être fixé de manière détachable par le biais de l'élément formant sangle (10), le second composant (2) étant de préférence une plateforme, en particulier un gilet, un porte-plaques et/ou un sac à dos, et/ou dans lequel le composant (1) selon l'une des revendications 1 à 12 est un élément de transport qui est de préférence fabriqué en matière textile.
